# EUROPÄISCHE PATENTSCHRIFT

(11) **EP 0 733 678 B1**
(45) Veröffentlichungstag und Bekanntmachung des Hinweises auf die Patenterteilung: **15.12.1999**
(21) Anmeldenummer: 96103635.7
(22) Anmeldetag: 08.03.1996
(51) Int. Cl.: C08L 101/00, C08L 51/00

(54) **Mattierte thermoplastische Formmassen**
Matted thermoplastic moulding compositions
Masses à mouler thermoplastiques mates

(30) Priorität: 16.03.1995 DE 19509514
(43) Veröffentlichungstag der Anmeldung: 25.09.1996
(73) Patentinhaber: BASF AKTIENGESELLSCHAFT, 67056 Ludwigshafen (DE)
(72) Erfinder: McKee, Graham Edmund, Dr., 67433 Neustadt (DE); Koch, Jürgen, Dr., 67141 Neuhofen (DE); Fischer, Wolfgang, Dr., 67067 Ludwigshafen (DE); Gottschalk, Axel, Dr., 67435 Neustadt (DE); Güntherberg, Norbert, Dr., 67346 Speyer (DE); Rosenau, Bernhard, Dr., 67434 Neustadt (DE)

(56) Entgegenhaltungen:
- EP-A- 0 202 214
- DATABASE WPI Week 9010 Derwent Publications Ltd., London, GB; AN 70450 XP002007829 & JP-A-02 022 356 (TORAY IND INC) , 25.Januar 1990
- DATABASE WPI Week 8915 Derwent Publications Ltd., London, GB; AN 110689 XP002007830 & JP-A-01 056 762 (SUMITOMO NAUGATUCK) , 3.März 1989
- DATABASE WPI Week 8003 Derwent Publications Ltd., London, GB; AN 4421c XP002007831 & JP-A-54 154 452 (HEXACHEMICAL KK) , 5.Dezember 1979
- DATABASE WPI Week 9530 Derwent Publications Ltd., London, GB; AN 228820 XP002007832 & JP-A-07 138 448 (DAICEL CHEM IND LTD) , 30.Mai 1995

## Beschreibung

Die vorliegende Erfindung betrifft thermoplastische Formmassen, enthaltend
A) 50 bis 99 Gew.-%, bezogen auf das Gesamtgewicht der Formmasse, eines schlagzäh modifizierten Polymerisats, wobei ABS-Polymerisate ausgenommen sind,
B) 1 bis 20 Gew.-%, bezogen auf das Gesamtgewicht der Formmasse, einer Mischung aus
   B₁) einem Copolymer mit einpolymerisierten Einheiten, die sich von einer polymerisierbaren Carbonsäure oder deren Derivaten, ausgewählt aus Carbonsäureanhydriden, Carbonsäureamiden und Carbonsäureestern, ableiten und
   B₂) einem Polyamid
C) 0 bis 40 Gew.-% faser- oder teilchenförmige Füllstoffe oder deren Mischungen
D) 0 bis 20 Gew.-% übliche Zusatzstoffe und Verarbeitungshilfsmittel.

Thermoplastische Formmassen, enthaltend Styrol/Maleinsäureanhydrid(S/MSA)-Copolymere, schlagzäh modifizierte Styrol/Acrylnitril(S/AN)-Copolymere und Polyamide, sind an sich bekannt und in der Literatur beschrieben.

Nur beispielsweise seien hier die EP-A 276 512, die DE-A 31 20 803 und die DE-A 35 44 761 genannt. Der Polyamid-Anteil in diesen Mischungen beträgt in der Regel 20 % oder mehr, teilweise bildet das Polyamid die kontinuierliche Phase in den Mischungen. Im wesentlichen handelt es sich also um schlagzäh modifizierte Polyamide, die mit schlagzähen Styrol-Acrylnitril-Copolymeren modifiziert sind. Die S/MSA-Copolymere sollen die Verträglichkeit des Polyamids mit dem schlagzähen S/AN-Copolymer verbessern.

In der EP 319 056 werden Mischungen aus einem Pfropfkautschuk, einem Maleinsäureanhydrid-Gruppen enthaltenden Pfropfkautschuk und einem Polyamid beschrieben. Die so erhältlichen Formmassen führen zu Formteilen mit hohem Oberflächenglanz.

Polymere, die zu Formteilen mit matter Oberfläche führen, sind von wachsendem Interesse für Anwendungsbereiche, bei denen gleichzeitig hohe Zähigkeit und niedrige Lichtreflexionswerte (verminderte Blendung) gefordert werden, beispielsweise in Innenräumen von Automobilen oder für Gegenstände mit optisch anspruchsvollen Oberflächen zur Vermeidung von Fingerabdrücken.

Zur Erreichung dieses Ziels wurden schlagzäh modifizierende Thermoplasten, grobteilige Kautschuke (US 4 169 869), schwach vernetzte Kautschuke (DE 20 57 936) und Kautschuke mit sauren bzw. basischen Gruppen in Pfropfgrundlage und Pfropfhülle zugesetzt (DE 34 05 938, EP 576 960).

Die JP-A 02 022 356 offenbart matte thermoplastische Formmassen aus ABS, Polyamid und Polyglutarimid.

Insgesamt sind jedoch diese Produkte noch nicht in vollem Umfang zufriedenstellend.

Aufgabe der vorliegenden Erfindung war es daher, thermoplastische Formmassen auf der Basis schlagzäh modifizierter Thermoplaste zur Verfügung zu stellen, die sich bei guter Zähigkeit zu Formkörpern mit reduziertem Oberflächenglanz verarbeiten lassen.

Überraschenderweise wurde gefunden, daß diese Aufgabe mit den thermoplastischen Formmassen gemäß Anspruch 1 gelöst werden kann. Bevorzugte Massen dieser Art sind den Unteransprüchen zu entnehmen. Darüber hinaus wurde gefunden, daß sich Mischungen aus Copolymeren mit einpolymerisierten Einheiten, die sich von α,β-ungesättigten Dicarbonylverbindungen oder deren Derivaten ableiten, und Polyamiden als Mattierungsmittel für schlagzäh modifizierte Thermoplasten eignen.

Als Komponente A) enthalten die erfindungsgemäßen Formmassen 50 bis 99, vorzugsweise 60 bis 98 und insbesondere 65 bis 95 Gew.-%, bezogen auf das Gesamtgewicht der Formmasse, eines schlagzäh modifizierten Thermoplasten.

Als zu mattierender Thermoplast A) dienen vor allem schlagzäh modifizierte Thermoplaste, bestehend aus den nachstehend beschriebenen Komponenten A1) + A2), von denen nachstehend nur einige bevorzugte aufgeführt werden, sowie auch schlagzäh modifizierte Thermoplaste aus der Reihe der Polycarbonate, Polyester, Polyestercarbonate, Polyamide, Polyetherketone, Polyethersulfone, Polysulfone, Polyoxyalkylene, Polyarylensulfide, Polyphenylenether oder Mischungen davon.

Bevorzugt sind insbesondere die sogenannten AES- und ASA-Polymerisate. Diese bestehen im allgemeinen aus mindestens einem Pfropfcopolymerisat (Komponente A1) und mindestens einem Thermoplasten (Komponente A2), welcher im allgemeinen die Pfropfcopolymerisate dispergiert enthält.

Pfropfcopolymerisate 1l) werden im allgemeinen hergestellt durch Pfropfung von mindestens einem der im folgenden aufgeführten Monomeren A12) auf mindestens einem der im folgenden aufgeführten Pfropfgrundlagen A11.

Es kann aber auch in Einzelfällen sein, daß die Komponente A1) keine Pfropfhülle besitzt, also einstufig ist, und dennoch (teil)verträglich mit der thermoplastischen Komponente A2) ist. In diesem Fall ist Komponente A1) mit der Beschreibung der Kautschuke A11) identisch.

Als Kautschuk A11) können beispielsweise Naturkautschuk, Epichlorhydrin-Kautschuke, Ethylen-Vinylacetat-Kautschuke, Polyethylenchlorsulfonkautschuke, Silikonkautschuke, Polyetherkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke eingesetzt werden. Bevorzugt werden Acrylatkautschuke, Ethylen-Propylen-Dien-Kautschuke, hydrierte Butadien- und Isoprenkautschuke oder Silikonkautschuke.

Acrylatkautschuke sind beispielsweise Alkylacrylat-Kautschuke auf der Basis von einem oder mehreren C₂-C₃₂-Alkyl-, vorzugsweise C₂-C₈-Alkylacrylaten, so insbesondere von Butyl-, Hexyl-, Octyl- und 2-Ethylhexylacrylat. Diese Alkylacrylatkautschuke können bis zu 30 Gew.-% Monomere wie Vinylacetat, (Meth)acrylnitril, Styrol, substituiertes Styrol, Methylmethacrylat, Vinylether copolymerisiert enthalten. Diese Acrylatkautschuke können weiterhin bis zu 10 Gew.-%, vorzugsweise 1 bis 5 Gew.-% bezogen auf die bei der Herstellung der Kautschukgrundlage eingesetzten Monomeren an vernetzend wirkenden, polyfunktionellen Monomeren copolymerisiert enthalten. Beispiele sind Monomere, die zwei oder mehr zur Copolymerisation befähigte Doppelbindungen enthalten, die nicht in 1,3-Stellung konjugiert sind. Geeignete Vernetzungsmonomere sind beispielsweise Divinylbenzol, Diallylmaleat, Diallylfumarat, Diallylphthalat, Triallylcyanurat, Triallylisocyanurat, Triallylphosphat, Allylmethacrylat. Als besonders günstiges Vernetzungs-Monomer hat sich der Acrylsäureester des Tricyclodecenylalkohols erwiesen (vgl. DE-PS 12 60 135).

Geeignete Acrylatkautschuke sind auch Produkte, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern und einer oder mehrerer weiterer Pfropfhüllen enthalten, wobei mindestens eine davon ein Acrylatkautschuk ist.

Geeignete Silikonkautschuke können z.B. vernetzte Silikonkautschuke aus Einheiten der allgemeinen Formeln R₂SiO, RSiO_{3/2}, R₃SiO_{1/2} und SiO_{2/4} sein, wobei R einen einwertigen Rest darstellt. Die Mengen der einzelnen Siloxaneinheiten sind dabei so bemessen, daß auf 100 Einheiten der Formel R₂SiO 0 bis 10 Mol-Einheiten der Formel RSiO_{3/2}, 0 bis 1,5 Mol-Einheiten R₃SiO_{1/2} und 0 bis 3 Mol-Einheiten SiO_{2/4} vorhanden sind. R kann dabei entweder ein einwertiger gesättigter Kohlenwasserstoffrest mit 1 bis 18 C-Atomen, der Phenylrest oder der Alkoxy-Rest oder eine radikalisch angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Methyl.

Bevorzugte Silikonkautschuke enthalten eingebaute Einheiten radikalisch angreifbarer Gruppen, insbesondere Vinyl-, Allyl-, Halogen-, Mercaptogruppen, vorzugsweise in Mengen von 2 bis 10 Mol-%, bezogen auf alle Reste R.

Sie können beispielsweise nach den Angaben der EP-A-260 558 hergestellt werden.

Geeignete Monomere zur Bildung der Pfropfhülle A12) sind im allgemeinen ausgewählt aus mindestens einer der nachstehenden Gruppen A121) und A122).
A121) Styrol und seine substituierten Derivate, wie z.B. α-Methylstyrol, α-Chlorstyrol, p-Chlorstyrol, 2,4-Dichlorstyrol, p-Methylstyrol, 3,4-Dimethylstyrol, p-tert.-Butylstyrol, o- und p-Divinylbenzol, p-Methyl-α-Methylstyrol und p-Chlor-α-Methylstyrol, Methylmethacrylat; bevorzugt sind Styrol und α-Methylstyrol.
A122) Acryl- und Methacrylverbindungen, wie z.B. Acrylnitril, Methacrylnitril, Acryl- und Methacrylsäure, Methylacrylat, Ethylacrylat, n- und Isopropylacrylat, n- und iso-Butylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimid, z.B. Alkyl- und Acrylmaleinimide, wie beispielsweise Methyl- oder Phenylmaleinimid, bevorzugt Acrylnitril, Methylmethacrylat, Maleinsäureanhydrid und Phenylmaleinimid.

Bevorzugte Herstellverfahren für A1) sind die Emulsions-, Lösungs-, Masse- oder Suspensionspolymerisation. Besonders bevorzugt können die Polymerisate A1) durch radikalische Emulsionspolymerisation hergestellt werden. Insbesondere können die Pfropfcopolymerisate A1) durch radikalische Emulsionspfropfpolymerisation der Monomeren A12 in Gegenwart von Kautschuklatices der Komponente A11) bei Temperaturen von 20 bis 90°C unter Verwendung wasserlöslicher oder teilweise öllöslicher Initiatoren wie Peroxodisulfat, oder mit Hilfe von Redoxinitiatoren erzeugt werden. Im Falle von Redoxinitiatoren kann die Polymerisationstemperatur auch unterhalb von 20°C liegen.

Es können aber auch solche Kautschuke Verwendung finden, die bereits aus vorgebildeten Kern/Mantel-Kautschukteilchen bestehen. So kann beispielsweise der Kern aus einem Polybutadienkautschuk oder einem Siliconkautschuk, aber auch aus einem Styrol- oder Methylmethacrylat-Homo- oder -Copolymeren, wie z.B. Styrol/Acrylnitril bestehen. Der Mantel kann dann beispielsweise aus einem Acrylat bestehen (EP-A-260 558). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (z.B. nach EP-A-230 282, DE-OS 36 01 419, EP-A-269 861).

Die Komponente A) besteht zu 5 bis 94 Gew.-%, bevorzugt zu 10 bis 78 Gew.-% und insbesondere 20 bis 65 Gew.-% aus dem Pfropfcopolymeren (Elastomeren) A1) und zu 6 bis 95 Gew.-%, bevorzugt 22 bis 90 und insbesondere zu 35 bis 80 Gew.-% aus der Hartmatrix A2. Die Elastomeren A1 enthalten im allgemeinen 10 bis 100 Gew.-%, bevorzugt 20 bis 90 und besonders bevorzugt 30 bis 85 Gew.-% Grundkautschuk A11 und bis 90 Gew.-%, bevorzugt 10 bis 80, besonders bevorzugt 15 bis 70 Gew.-% pfropfcopolymerisierte Monomere A12.

Die Monomeren A121) werden im allgemeinen in einer Menge von 50 bis 100 Gew.-%, vorzugsweise 60 bis 95 Gew.-% und die Monomeren A122 in einer Menge bis zu 50 Gew.-%, vorzugsweise von 5 bis 40 Gew.-% verwendet. A12) kann jedoch aus 100 Gew.-% (Meth)acrylaten bestehen, z.B. aus einer Mischung aus Methylmethacrylat und Methylacrylat.

Die Kautschuke liegen in diesen Polymerisaten All) im allgemeinen in Form vernetzter oder teilweise vernetzter Teilchen vor. Die mittlere Teilchengröße d(50) der Polymerisate A1 liegt im allgemeinen zwischen 0,05 und 10 µm, vorzugsweise zwischen 0,08 und 1 µm.

Als erfindungsgemäße Komponente A2) können bevorzugt Vinylpolymere und (Meth)acrylpolymere, als Homo- und Copolymerisate aus den unter A121) und A122) genannten Monomeren hergestellt werden. Beispiele für geeignete Homo- bzw. Copolymerisate sind Polystyrol, Polymethylmethacrylat, Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-tert.-Butylmethacrylat-Copolymere, Styrol-Acrylnitriltert.-Butylmethacrylat-Copolymere.

Solche Copolymerisate entstehen häufig bei der Pfropfpolymerisation zur Herstellung des Pfropfcopolymeren A1, besonders dann, wenn große Mengen Monomere A12 auf kleine Mengen Kautschuk A11 gepfropft werden. Die Vinylpolymere und (Meth)-Acrylpolymere können mittels bekannter radikalischer, anionischer und kationischer Polymerisationsverfahren hergestellt werden. Auch die bekannte Redoxpolymerisation oder die bekannte Polymerisation mit metallorganischen Mischkatalysatoren kann vorteilhaft sein.

Bevorzugte ASA-und AES-Polymerisate als Komponente A) enthalten 6 bis 95, vorzugsweise 22 bis 90 und insbesondere 35 bis 80 Gew.-% eines Copolymerisates A2) aus 50 bis 95, vorzugsweise 55 bis 90 und insbesondere 60 bis 85 Gew.-% vinylaromatischen Monomeren und 5 bis 50, vorzugsweise 10 bis 45 und besonders bevorzugt 15 bis 40 Gew.-% polaren copolymerisierbaren Monomeren aus der Gruppe Acrylnitril, Methacrylnitril, Ester der (Meth)Acrylsäure mit 1 bis 4 C-Atomen in Alkylrest, Maleinsäureanhydrid, (Meth)acrylamid, Vinylalkylether mit 1 bis 8 C-Atomen im Alkylrest und oder Phenylmaleinimid oder deren Mischungen.

Als vinylaromatische Monomere haben sich Styrol und substituierte Styrole der allgemeinen Formel 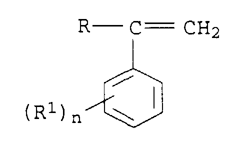 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat, bewährt.

Das Pfropfmischpolymerisat, welches im allgemeinen 5 bis 94, vorzugsweise 10 bis 78 und insbesondere 20 bis 65 Gew.-%, bezogen auf das Gesamtgewicht der Komponente A) ausmacht, ist aufgebaut aus
A11)10 bis 100, vorzugsweise 20 bis 90 und insbesondere 30 bis 85 Gew.-% einer Pfropfgrundlage aufgebaut aus
   A111) 50 bis 100, vorzugsweise 55 bis 98 und insbesondere
      60 bis 95 Gew.-%, bezogen auf A11) eines Alkylacrylates mit 1 bis 30 C-Atomen im Alkylrest,
   A112) 0 bis 50, vorzugsweise 0 bis 45 und insbesondere
      0 bis 40 Gew.-%, bezogen auf A11) eines weiteren, mit A111) copolymerisierbaren einfach ungesättigten Monomeren und
   A113) 0 bis 5, vorzugsweise 0,05 bis 4 und insbesondere
      0,1 bis 4 Gew.-%, bezogen auf A11) eines mindestens bifunktionellen, vernetzend wirkenden Monomeren.

Bevorzugte Monomere A111) sind Alkylacrylate mit 2 bis 30 0-Atomen im Alkylrest, insbesondere Ethylacrylat, tert.-, iso- und n-Butylacrylat und 2-Ethylhexylacrylat, wovon die beiden letztgenannten besonders bevorzugt werden.

Als bevorzugte Diene A111) seien Isopren und Butadien und als Monomere A112) Styrol, Acrylnitril, Methacrylnitril und/oder Vinylalkylether mit 1 bis 8 C-Atomen im Alkylrest (z.B. Vinylmethylether, Vinylpropylether, Vinylethylether) oder Mischungen derselben genannt.

Beispielhaft für vernetzend wirkende bifunktionelle Monomere A113) seien Divinylbenzol, Diallylmaleat, Diallylfumarat, Diallylphthalat und Dihydrodicyclopentadienylacrylat (DCPA, wie in der DE-A 12 60 135 beschrieben) genannt, wobei letzteres bevorzugt wird.

Verfahren zur Herstellung von Polymeren A11) sind dem Fachmann bekannt, und in der Literatur beschrieben, z.B. in der DE-PS 1 260 135. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel d₅₀) im Bereich von etwa 50 bis 700, insbesondere von 100 bis 600 nm aufweist.

Auf die Pfropfgrundlage A11) ist eine Pfropfhülle A12) aufgepfropft, die durch Copolymerisation von
A121) 50 bis 100, vorzugsweise 60 bis 95 und insbesondere 65 bis 85 Gew.-% eines vinylaromatischen Monomeren, vorzugsweise Styrol oder substituierten Styrolen der allgemeinen Formel I 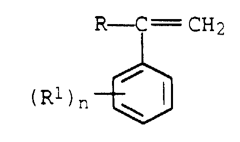 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat, und
A122) 0 bis 50, vorzugsweise 5 bis 40 und insbesondere 15 bis 35 Gew.-% polaren copolymerisierbaren Monomeren Acrylnitril, Methacrylnitril, Ester der (Meth)acrylsäure mit 1 bis 20 C-Atomen im Alkylrest, Maleinsäureanhydrid, (Meth)acrylamid Vinylalkylether mit 1-8 C-Atomen im Alkylrest und/oder Phenylmaleinimid oder deren Mischungen
erhalten wird.

Die Pfropfhülle kann jedoch aus einem oder mehreren (Meth)acrylaten bestehen, z.B. einer Mischung aus Methylmethacrylat und einem Acrylat wie Methyl-, Ethyl- oder Butylacrylat.

Die Pfropfhülle A12) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 31 49 358 und der DE-OS 34 14 118 beschrieben ist.

Je nach den gewählten Bedingungen entsteht bei der Pfropfmischpolymerisation ein bestimmter Anteil an freien Copolymerisaten von z.B. Styrol und Acrylnitril.

Das Pfropfmischpolymerisat (A11 + A12) weist im allgemeinen eine mittlere Teilchengröße von vorzugsweise 50 bis 1000 nm, insbesondere von 100 bis 700 nm (d₅₀-Gewichtsmittelwert) auf. Die Bedingungen bei der Herstellung des Elastomeren All) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße d₅₀ im Bereich von 50 bis 150 nm und ein zweites Polymer eine Teilchengröße von 200 bis 700 nm aufweist, wie sie in der bereits erwähnten US-PS 5,196,480 beschrieben werden.

Als Komponente B) enthalten die erfindungsgemäßen thermoplastischen Formmassen 1 bis 20, bevorzugt 2 bis 18 und insbesondere 5 bis 15 Gew.-% einer Mischung aus
B₁) einem Copolymeren mit einpolymerisierten Einheiten, die sich von einer polymerisierbaren Carbonsäure oder deren funktionellen Derivaten ableiten und
B₂) einem Polyamid.

Das Mengenverhältnis der Komponenten B₁) und B₂) unterliegt an sich keiner besonderen Beschränkung und liegt im allgemeinen im Bereich von 10:1 bis 1:10, vorzugsweise 5:1 bis 1:5 und besonders bevorzugt 3:1 bis 1:3.

Bei der Komponente B₁) handelt es sich bevorzugt um ein Copolymeres aus im wesentlichen vinylaromatischen Monomeren und/oder Ethylen und den genannten Carbonsäuren bzw. deren Derivaten, wobei der Anteil an Vinylaromaten und/oder Ethylen im Monomergemisch vorzugsweise 40 bis 99,5, besonders bevorzugt 50 bis 99 und insbesondere 60 bis 99 Gew.-% beträgt.

Als vinylaromatische Monomeren werden bevorzugt Styrol und Styrolderivate verwendet, z.B. α-Methylstyrol, o-, m- und p-Methylstyrol, Chlorstyrol und Mischungen dieser Verbindungen.

Als Beispiele für polymerisierbare Carbonsäuren seien hier nur stellvertretend Acrylsäure, Methacrylsäure, Fumarsäure und Maleinsäure genannt.

Bei den funktionellen Derivaten der polymerisierbaren Carbonsäuren handelt es sich bevorzugt um Carbonsäureanhydride, Carbonsäureamide, und/oder Carbonsäureester. Nur stellvertretend seien hier als funktionelle Derivate Maleinsäureanhydrid, C₁-C₈-Alkylester, Amide, C₁-C₈-Alkyl- oder Dialkylamide und Salze, insbesondere Metallsalze der I. und II. Hauptgruppe des Periodensystems, genannt.

Weiterhin geeignet sind Methylmaleinsäureanhydrid, Chlormaleinsäureanhydrid, Citraconsäureanhydrid, Butenylbernsteinsäureanhydrid, Tetrahydrophthalsäureanhydrid und Ester und Halbester polymerisierbarer Säuren mit primären, sekundären oder tertiären Alkanolen wie Methanol, Ethanol, n-Propanol, iso-Propanol, n-Butanol, sec.-Butanol und tert.-Butanol, sowie die entsprechenden Amide. Carbonsäureanhydride, und Ester werden wiederum bevorzugt.

Komponenten B₁), die
60 bis 99 Gew.-% Styrol,
1 bis 15 Gew.-% Maleinsäureanhydrid und
0 bis 39 Gew.-% Methylmethacrylat und/oder Acrylnitril oder
60 bis 95 Gew.-% Styrol,
5 bis 20 Gew.-% Acryl- und/oder Methacrylsäure und
0 bis 25 Gew.-% Acrylnitril, Acryl- und/oder Methacrylsäureester enthalten, werden besonders bevorzugt.

Die Viskositätszahl (VZ) der Komponente B₁) liegt bevorzugt im Bereich von 20 bis 120 cm³/g, besonders im Bereich von 50 bis 90 cm³/g (bestimmt bei 25°C in 0,5 %iger Dimethylformamid-Lösung mit einem Ubbelohde-Viskosimeter nach DIN 53 726/8), was einem Molekulargewicht von vorzugsweise 5000 bis 500000, besonders bevorzugt von 20000 bis 200000 entspricht.

Die Komponente B₁) kann gemäß einer weiteren Ausführungsform auch neben der polymerisierbaren Carbonsäure bzw. deren funktionellen Derivaten noch weitere copolymerisierbare Monomere, insbesondere Vinylacetat und/oder (Meth)acrylnitril in Mengen von bis zu 37 Gew.-% enthalten.

Herstellungsverfahren zur Herstellung der Komponente B₁) sind an sich bekannt. Eine bevorzugte Ausführungsform ist die kontinuierliche, thermische oder radikalische Polymerisation der Monomeren bei 120 bis 160°C und einer Verweilzeit von 2 bis 8 Stunden, gegebenenfalls unter Verwendung von Lösungsmitteln, wie z.B. Ethylbenzol. Ethylenhaltige Copolymere werden üblicherweise bei erhöhter Temperatur unter hohen Druck hergestellt.

Die als Komponente B₂) verwendbaren Polyamide sind an sich bekannt. Halbkristalline oder amorphe Harze mit einem Molekulargewicht von mindestens 5000, wie sie z.B. in den DE-C-20 71 250, DE-C-20 71 251, DE-C-21 30 523, DE-C-21 30 948, DE-C-22 41 322, DE-C-23 12 966, DE-C-25 12 606 und DE-C-33 93 210 beschrieben werden, sind bevorzugt.

Beispiele hierfür sind Polyhexamethylenadipinsäureamid, Polyhexamethylenazelainsäureamid, methylenazelainsäureamid, Polyhexamethylensebacinsäureamid, Poly-11-aminoundecansäureamid und Bis- (p-aminocyclohexyl)-methandodecansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkompnente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Adipinsäure, Isophthalsäure und Hexamethylendiamin genannt.

Weiterhin bevorzugte Polyamide sind auch Copolyamide, z.B. auf der Basis Polyamid-6/Polyamid-66 im Verhältnis 10:1 bis 1:10, vorzugsweise 7:1 bis 1:1.

Die Herstellung dieser Polyamide wird ebenfalls in den vorgenannten Druckschriften beschrieben. Das Verhältnis von endständigen Amingruppen zu endständigen Säuregruppen kann durch Variation des Molverhältnisses der Ausgangsverbindungen gesteuert werden.

Neben den Komponenten A) und B) können die erfindungsgemäßen thermoplastischen Formmassen als Komponente C) 0 bis 40, vorzugsweise bis zu 30 Gew.-% faser- oder teilchenförmige Füllstoffe oder deren Mischungen enthalten, wie sie für Polymermischungen dieser Art dem Fachmann bekannt und in der Literatur beschrieben sind.

Schließlich können als Komponente D) noch 0 bis 20, vorzugsweise bis zu 10 Gew.-% übliche Zusatzstoffe und Verarbeitungshilfsmittel enthalten sein, die dem Fachmann ebenfalls bekannt sind.

Die erfindungsgemäßen thermoplastischen Formmassen können auf an sich bekannte Weise durch Mischen der Komponenten in der Schmelze, vorzugsweise auf einem Extruder, hergestellt werden. Entsprechende Verfahren sind dem Fachmann bekannt und in der Literatur beschrieben, so daß sich hier nähere Angaben erübrigen.

Die erfindungsgemäßen thermoplastischen Formmassen eignen sich insbesondere zur Herstellung von Fertigteilen aller Art mit matter Oberfläche durch Spritzguß oder Extrusion.

### Beispiele 1 bis 9

Folgende Komponenten wurden eingesetzt:
A) Mischung aus 50 Gew.-% eines in Emulsion hergestellten Pfropfkautschuks mit einer Pfropfgrundlage aus
   98 Gew.-% n-Butylacrylat und
   2 Gew.-% Dihydrodicyclopentadienylacrylat,
   gepfropft mit einer Mischung aus Styrol (75 Gew.-%) und Acrylnitril (25 Gew.-%) (Teilchengröße d₅₀ = 0,5 µm, Mengenverhältnis Pfropfgrundlage/Pfropfhülle = 60:40) und 50 Gew.-% eines in Lösung hergestellten Styrol(65 Gew.-%)/-Acrylnitril(35 Gew.-%)-Copolymeren mit einer VZ von 80 ml/g, gemessen in 0,5 gew.-%iger Lösung in Dimethylformamid (DMF) bei 23°C.
B₁/1) Umsetzungsprodukt eines Styrol/Maleinsäureanhydrid-Copolymeren (Gew.-Verh. 58:42) mit Anilin mit 8 Mol.-% freien MSA-Einheiten und einem Molekulargewicht von 135000 g/mol.
B₁/2) wie B₁/1, aber mit 12 Mol.-% freien MSA-Einheiten.
B₁/3) Styrol/MSA-Copolymeres (Gew.-Verh. 50:50) mit einem Molekulargewicht M_{w} von 350000 g/mol.
B₁/4) Copolymeres aus
   75 Gew.-% Styrol,
   21 Gew.-% Acrylnitril und
   4 Gew.-% MSA
   mit einer VZ von 80 ml/g, gemessen in 0,5 gew.-%iger Lösung in DMF bei 23°C.
B₂) Copolyamid aus 85 Gew.-% Poly-ε-Caprolactam und 15 Gew.-% Polyhexamethylenadipinsäureamid mit einer VZ von 195 ml/g, gemessen in 0,5 gew.-%iger Lösung in konzentrierter H₂SO₄ bei 25°C (DIN 53 727).

### Herstellung der Abmischungen

In einem ZSK 30 Extruder der Fa. Werner & Pfleiderer wurden die in der Tabelle angegebenen Mischungen herstellt:

Nach ihrer Herstellung wurde das Produkt zu Rundscheiben (60 x 2 mm) (Glanz-Messungen) und zu Normkleinstäben (Kerbschlagzähigkeits-Messungen) bei 220°C und einer Formtemperatur von 60°C verarbeitet.

**Tabelle**

| Beispiel | Zusammensetzung | AK [kJ/mm²] **) | Glanz [%] ***) |
|---|---|---|---|
| 1V *) | 95 Gew.-Teile A | 19 | 80 |
| | 5 Gew.-Teile B₁/4 | | |
| 2 | 90 Gew.-Teile A | 24 | 20 |
| | 5 Gew.-Teile B₁/4 | | |
| | 5 Gew.-Teile B₂ | | |
| 3 | 90 Gew.-Teile A | 21 | 12 |
| | 5 Gew.-Teile B₁/2 | | |
| | 5 Gew.-Teile B₂ | | |
| 4V *) | 95 Gew.-Teile A | 18 | 40 |
| | 5 Gew.-Teile B₁/2 | | |
| 5 | 85 Gew.-Teile A | 19 | 11 |
| | 10 Gew.-Teile B₁/1 | | |
| | 5 Gew.-Teile B₂ | | |
| 6V *) | 90 Gew.-Teile A | 15 | 44 |
| | 10 Gew.-Teile B₁/1 | | |
| 7 | 90 Gew.-Teile A | n.g. | 16 |
| | 5 Gew.-Teile B₁/3 | | |
| | 5 Gew.-Teile B₂ | | |
| | 95 Gew.-Teile A | | |
| 8V *) | 5 Gew.-Teile B₁/3 | n.g. | 40 |
| 9V *) | 100 Gew.-Teile A | 20 | 86 |

| | | | |
|---|---|---|---|
| *) Vergleichsversuch | | | |
| **) AK: Kerbschlagzähigkeit bei 23°C, gemessen nach DIN 53 453-K (Ausgabe 5/75) | | | |
| ***) Glanz: Gemessen im Winkel von 45° (Reflextion) mit einem Gonio Photometer GP2 der Fa. Zeiss | | | |

## Patentansprüche

1. Thermoplastische Formmassen, enthaltend
A) 50 bis 99 Gew.-%, bezogen auf das Gesamtgewicht der Formmasse, eines schlagzäh modifizierten Polymerisats, wobei ABS-Polymerisate ausgenommen sind,
B) 1 bis 20 Gew.-%, bezogen auf das Gesamtgewicht der Formmasse, einer Mischung aus
B₁) einem Copolymer mit einpolymerisierten Einheiten, die sich von einer polymerisierbaren Carbonsäure oder deren Derivaten, ausgewählt aus Carbonsäureanhydriden, Carbonsäureamiden und Carbonsäureestern, ableiten und
B₂) einem Polyamid
C) 0 bis 40 Gew.-% faser- oder teilchenförmige Füllstoffe oder deren Mischungen
D) 0 bis 20 Gew.-% übliche Zusatzstoffe und Verarbeitungshilfsmittel.

2. Thermoplastische Formmassen nach Anspruch 1, enthaltend als Komponente A ein ASA-Polymerisat.

3. Verwendung einer Mischung aus
B₁) einem Copolymer mit einpolymerisierten Einheiten, die sich von einer polymerisierbaren Carbonsäure oder deren Derivaten, ausgewählt aus Carbonsäureanhydriden, Carbonsäureamiden und Carbonsäureestern, ableiten und
B₂) einem Polyamid
zur Mattierung von schlagzäh modifizierten Thermoplasten, wobei ABS-Polymerisate ausgenommen sind.

4. Verwendung von Formmassen gemäß den Ansprüchen 1 bis 2 zur Herstellung von Fasern, Folien und Formkörpern.

## Claims

1. A thermoplastic molding material, containing
A) from 50 to 99% by weight, based on the total weight of the molding material, of a toughened polymer, with the exception of ABS polymers,
B) from 1 to 20% by weight, based on the total weight of the molding material, of a blend of
B₁) a copolymer comprising polymerized units which are derived from a polymerizable carboxylic acid or derivatives thereof, selected from carboxylic anhydrides, carboxylic amides and carboxylic esters, and
B₂) a polyamide,
C) from 0 to 40% by weight of a fibrous or particulate filler or of a mixture thereof and
D) from 0 to 20% by weight of conventional additives and processing assistants.

2. A thermoplastic molding material as claimed in claim 1, containing an ASA polymer as component A.

3. Use of a blend of
B₁) a copolymer containing polymerized units which are derived from a polymerizable carboxylic acid or derivatives thereof, selected from carboxylic anhydrides, carboxylic amides and carboxylic esters, and
B2) a polyamide
for dulling toughened thermoplastics, with the exception of ABS polymers.

4. Use of a molding material as claimed in claim 1 or 2 for the production of fibers, films or moldings.

## Revendications

1. Masses à mouler thermoplastiques, contenant
A) de 50 à 99% en poids, par rapport au poids total de la masse à mouler, d'un polymère modifié à haute résilience, à l'exception des polymères ABS,
B) de 1 à 20% en poids, par rapport au poids total de la masse à mouler, d'un mélange de
B₁) un copolymère comportant des unités polymérisées, dérivées d'un acide carboxylique polymérisable ou de ses dérivés, choisis dans le groupe formé par des anhydrides carboxyliques, des amides carboxyliques et des esters carboxyliques, et
B₂) un polyamide,
C) de 0 à 40% en poids de charges sous forme de fibres ou de particules ou leurs mélanges,
D) de 0 à 20% en poids additifs et auxiliaires de traitement usuels.

2. Masses à mouler selon la revendication 1, contenant en tant que composant A un polymère ASA.

3. Utilisation d'un mélange de
B₁) un copolymère comportant des unités polymérisées, dérivées d'un acide carboxylique polymérisable ou de ses dérivés, choisis dans le groupe formé par des anhydrides carboxyliques, des amides carboxyliques et des esters carboxyliques, et
B₂) un polyamide,
pour matifier des thermoplastiques modifiés à haute résilience, à l'exception de polymères ABS.

4. Utilisation de masses à mouler selon les revendications 1 et 2 pour la production de fibres, de feuilles et d'articles moulés.
